(19) Europäisches Patentamt
European Patent Office
Office européen des brevets

(11) **EP 4 603 866 A1**

(12) **EUROPEAN PATENT APPLICATION**

(43) Date of publication:
**20.08.2025 Bulletin 2025/34**

(21) Application number: **24171222.3**

(22) Date of filing: **19.04.2024**

(51) International Patent Classification (IPC):
***G01S 7/35*** (2006.01)  ***G01S 13/34*** (2006.01)
***G01S 13/58*** (2006.01)

(52) Cooperative Patent Classification (CPC):
**G01S 13/343; G01S 7/356; G01S 13/584**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2024 RO 202400057**

(71) Applicant: **NXP B.V.**
**5656 AG Eindhoven (NL)**

(72) Inventor: **Rosu, Filip Alexandru**
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **APPARATUS FOR PROCESSING RADAR SIGNAL**

(57)    An apparatus for processing radar signals configured to:
receive a radar signal comprising a radar frame of a plurality of chirps, the plurality of chirps comprising at least a first group transmitted with a first pulse repetition interval, and a second group transmitted with a second pulse repetition interval, wherein the groups are separated by a group separation time interval between a final chirp in the first group and a first chirp in the second group that is different to one or both of the first pulse repetition interval and the second pulse repetition interval;
generate a modified received radar frame by at least:
first extrapolation, based on temporal positions of the chirps in the first group of the received radar frame, to generate at least one extrapolated chirp in the modified received radar frame;
perform processing based on said modified received radar frame.

Figure 1

EP 4 603 866 A1

## Description

### Field

The present disclosure relates to an apparatus for processing Frequency Modulated Continuous Wave, FMCW, radar signals. In particular, it relates to a system configured to transmit a radar frame and receive the radar frame reflected from one or more targets. It also relates to an associated method.

### Background

FMCW radar is commonly used in automotive applications. One of the more challenging issues that affects automotive radar systems is that of real-time velocity disambiguation in the context of time-division-multiplexed, TDM, radar, such as TDM-MIMO. Such a challenge is also applicable to other types of multiplexed radar.

### Summary

According to a first aspect of the present disclosure there is provided an apparatus for processing Frequency Modulated Continuous Wave, FMCW, radar signals, the apparatus configured to:

receive a radar signal comprising a radar frame having reflected from one or more targets, wherein the radar frame comprises a plurality of chirps, the plurality of chirps comprising at least two groups of chirps comprising a first group transmitted with a first pulse repetition interval between the chirps therein, and a second group transmitted with a second pulse repetition interval between the chirps therein, wherein the first group and the second group are separated by a group separation time interval between a final chirp in the first group and a first chirp in the second group that is different to one or both of the first pulse repetition interval and the second pulse repetition interval;

generate a modified received radar frame by at least: first extrapolation, based on temporal positions of the chirps in the first group of the received radar frame, to generate at least one extrapolated chirp in the modified received radar frame;

perform processing based on said modified received radar frame to determine properties of the one or more targets.

In one or more examples, the first pulse repetition interval is the same as the second pulse repetition interval.

In one or more embodiments, said at least one extrapolated chirp generated by the first extrapolation is extrapolated to a time that is later in the received radar frame and between two chirps of the second group in the received radar frame.

In one or more embodiments, said first extrapolation is configured to generate a plurality of extrapolated chirps which are extrapolated such that the plurality of extrapolated chirps are interleaved with chirps of the second group in the modified received radar frame.

In one or more embodiments, said generation of the modified received radar frame further comprises a: second extrapolation, based on temporal positions of the chirps in the second group of the received radar frame, to generate at least one extrapolated chirp in the modified received radar frame.

In one or more embodiments, said at least one extrapolated chirp generated by the second extrapolation is extrapolated to a time that is between two chirps of the first group in the modified received radar frame.

In one or more embodiments, said second extrapolation is configured to generate a plurality of extrapolated chirps which are extrapolated such that the extrapolated chirps are interleaved with chirps of the first group in the modified received radar frame.

In one or more embodiments, said generation of the extrapolated chirps is configured to generate the modified received radar frame with a pulse repetition interval less than the first pulse repetition interval and less than the second pulse repetition interval.

In one or more embodiments, the extrapolation comprises linear extrapolation.

In one or more embodiments, the apparatus is configured to perform said extrapolation based on Burg's algorithm for autoregressive parameter estimation.

In one or more embodiments, the generation of the modified received radar frame further comprises the apparatus being configured to:

extract the chirps corresponding to the first group from the received radar frame to generate a first received radar frame;

extract the chirps corresponding to the second group from the received radar frame to generate a second received radar frame;

generate a modified first received radar frame by performing said first extrapolation, based on temporal positions of the chirps in the first group of the first received radar frame, to generate at least one extrapolated chirp at a later time in the modified first received radar frame;

generate a modified second received radar frame by performing second extrapolation, based on temporal positions of the chirps in the second group of the second received radar frame, to generate at least one extrapolated chirp at an earlier time in the modified second received radar frame;

generate a Fast Fourier Transform, FFT, of the modified first received radar frame;

generate a FFT of the modified second received radar frame; and

wherein the modified received radar frame comprises a sum of FFT of the modified first received radar frame and the FFT of the modified second received radar frame.

In one or more embodiments, the apparatus is configured to:
provide for transmission of the radar frame having said first pulse repetition interval, second pulse repetition interval and said group separation time interval properties.

In one or more embodiments, the first pulse repetition interval and the second pulse repetition interval each comprise the product of the number of groups, N, and a base time interval, T; and said group separation time interval between any two temporally adjacent groups comprises NT plus or minus T.

In one or more embodiments, one or both of:

the first extrapolation and any further extrapolation is performed such; and
the group separation time interval and the first pulse repetition interval and the second pulse repetition time interval are selected such;
that the extrapolated chirps are temporally non-overlapping with the chirps of the received radar frame.

In one or more embodiments, the properties of the one or more targets determined based on the modified received radar frame comprise one or more of: distance to the one or more targets; direction towards the one or more targets; and velocity of the one or more targets.

According to a second aspect of the disclosure, we provide a method of processing Frequency Modulated Continuous Wave, FMCW, radar signals, the apparatus configured to:

receiving a radar signal comprising a radar frame having reflected from one or more targets, wherein the radar frame comprises a plurality of chirps, the plurality of chirps comprising at least two groups of chirps comprising a first group transmitted with a first pulse repetition interval between the chirps therein, and a second group transmitted with a second pulse repetition interval between the chirps therein, wherein the first group and the second group are separated by a group separation time interval between a final chirp in the first group and a first chirp in the second group that is different to one or both of the first pulse repetition interval and the second pulse repetition interval;
generating a modified received radar frame by:
first extrapolation, based on temporal positions of the chirps in the first group of the received radar frame, to generate at least one extrapolated chirp in the modified received radar frame; and
performing processing based on said modified received radar frame to determine properties of the one or more targets.

In one or more examples, said first extrapolation is configured to generate a plurality of extrapolated chirps which are extrapolated such that the plurality of extrapolated chirps are at least partly interleaved with chirps of the second group in the modified received radar frame.

In one or more examples, said generating of the modified received radar frame further comprises:
second extrapolation, based on temporal positions of the chirps in the second group of the received radar frame, to generate a plurality of extrapolated chirp in the modified received radar frame.

In one or more examples, said plurality of extrapolated chirps generated by the second extrapolation are extrapolated such that the plurality of extrapolated chirps are at least partly interleaved with chirps of the first group in the modified received radar frame.

In one or more examples, one or both of:

the first extrapolation and the second extrapolation is performed such; and
the group separation time interval and the first pulse repetition interval and the second pulse repetition time interval are selected such;
that the extrapolated chirps are temporally non-overlapping with the chirps of the received radar frame.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

**Brief Description of the Drawings**

One or more embodiments will now be described by way of example only with reference to the accompanying drawings in which:

Figure 1 shows an example embodiment comprising a block diagram of an apparatus within a radar system;
Figure 2 shows a first example embodiment of a radar frame and the generation of a modified received radar frame that has reflected from one or more objects;
Figure 3 shows a second example embodiment of a radar frame and the generation of a modified received radar frame that has reflected from one or more objects;
Figure 4 shows a third example embodiment of a radar frame and the generation of a modified received radar frame that has reflected from one or more objects;
Figure 5 shows a fourth example embodiment of a radar frame and the generation of a modified received radar frame that has reflected from one or more objects;
Figure 6 shows a comparison of example plots of range bins versus doppler bins for received radar frames and modified received radar frames.

**Detailed Description**

We disclose embodiments of an apparatus that provides real-time velocity disambiguation in the context of TDM-MIMO radar, but is also applicable to other types of division multiplexing. As will be familiar to those skilled in the art, for a given wavelength, the maximum unambiguous velocity that can be determined from radar signals depends on the Pulse Repetition Interval, PRI.

Among many, there are four principal challenges in reducing the PRI:

a) constructing a Voltage Controlled Oscillator (VCO) / Phase Locked Loop (PLL) capable of providing very short chirps for a given bandwidth,
b) constructing a VCO/PLL with extremely fast recovery rate (hysteresis),
c) provision of a processor powerful enough to process the signals and provide Interference Mitigation and range determining fast Fourier transforms between two consecutive chirps, and
d) provision of an Analogue to Digital (ADC) convertor with a sampling rate high enough to enable determination of the desired upper range.

The example embodiments described transmit a radar frame that is divided into spaced sub-frames or groups each with a predetermined separation between component chirps. It has been found that extrapolation techniques may be applied on the received radar signal such that real and extrapolated samples become interleaved and the PRI is accordingly reduced. A lower PRI allows for a greater maximum unambiguous velocity determination for a target from the radar signals.

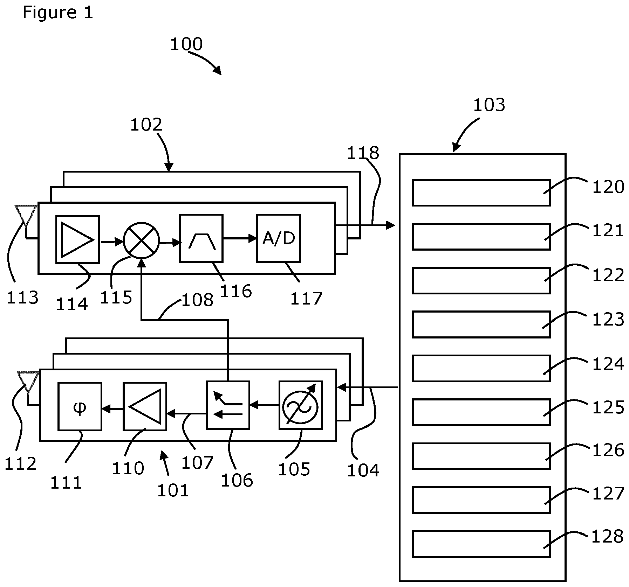

Example figure 1 shows a block diagram of an apparatus within a typical radar system 100. The radar system 100 of the example is of time division multiplexed multiple-input and multiple-output type, TDM-MIMO. It is also of FMCW type. However, the disclosure is not limited to TDM-MIMO radar systems.

The radar system 100 comprises one or more transmitter arrangements 101 for transmitting the radar signals. The radar signals may be formed of a plurality of radar frames each at a different frequency. The radar frames comprise a plurality of time-spaced chirps. The radar system 100 comprises one or more receiver arrangements 102 for receiving the transmitted radar signals having reflected from one or more targets in an environment. Thus, each receiver arrangement may receive a radar frame of a different frequency and provide it for processing to an apparatus 103. The apparatus 103 shows, schematically, a series of processing steps that illustrate the processing of the embodiments and will be described later.

In general, the transmitter arrangement 101 may receive signals 104 from the apparatus 103 to cause it to transmit radar signals which may comprise one or more radar frames. In general, the transmitter arrangement 101 comprises a VCO or PLL 105 that may be controlled to generate radar frames comprising a plurality of chirps and having a particular pulse repetition interval between the chirps. A coupler/splitter 106 is configured to provide part of the signal 107 comprising the generated radar frame to the remainder of the transmitter arrangement 101 and part 108 of the signal comprising the generated radar frame to the receiver arrangement 102. An amplifier 110 is configured to amplify the part 107 and a phase shifter 111 applies a phase shift to the amplified signal. An antenna 112 provides for transmission of the radar signal to the environment such that it is able to reflect from one or more targets that may be present.

The receiver arrangement 102 may comprise an antenna 113 to receive the transmitted radar signals and, in particular, the radar frame, having reflected from the one or more targets in the environment. An amplifier 114 amplifies the signal. A mixer 115, that also receives the part 108, down-converts the radar signal. A band pass filter 116 or other filter type filters the signal. An analogue to digital converter 117 digitises the signal and provides it to the apparatus 103 for processing. Thus, the apparatus 103 may be configured to receive a (e.g. digital) signal representing the reflected radar frame that was transmitted.

It will be appreciated that the transmitter arrangement 101 and the receiver arrangement 102 may take other forms and may contain additional or alternative components.

In general, the apparatus 103 is configured for processing Frequency Modulated Continuous Wave, FMCW, radar signals, which may be received at the input 118 from the receiver arrangement 101. In some examples, the apparatus 103 may be provided separately from the receiver arrangement 101 and/or the transmitter arrangement 102. Thus, the functionality of the apparatus 103 may be provided and configured for coupling with the receiver arrangement 101 and/or transmitter arrangement 102. In the present example, the apparatus 103 includes the functionality to generate the radar frames by way of signals 104 for the transmitter arrangement, but the transmitter arrangement is a separate part. However, in some examples, the apparatus 103 may not provide the signals 104 for generation of the radar frame and this task may be performed by a separate apparatus (not shown). In such an example, the apparatus may be provided with knowledge of the form of the radar frame.

The apparatus 103 may be configured to pre-process the raw data received from the one or more receiver arrangements at step 120. Range compression may be performed at step 121. Steps 122-125 may comprise the advantageous steps performed by the apparatus of the disclosure and will be described in more detail below.

Constant false alarm rate (CFAR) detection may be optionally performed at step 126. MIMO array construction may be performed at step 127. Direction of arrival estimation may be performed at step 128. Step 128 may include velocity determination.

It will be appreciated that steps 122-125 may be performed at different times or may be distributed amongst the other processing steps differently in other embodiments.

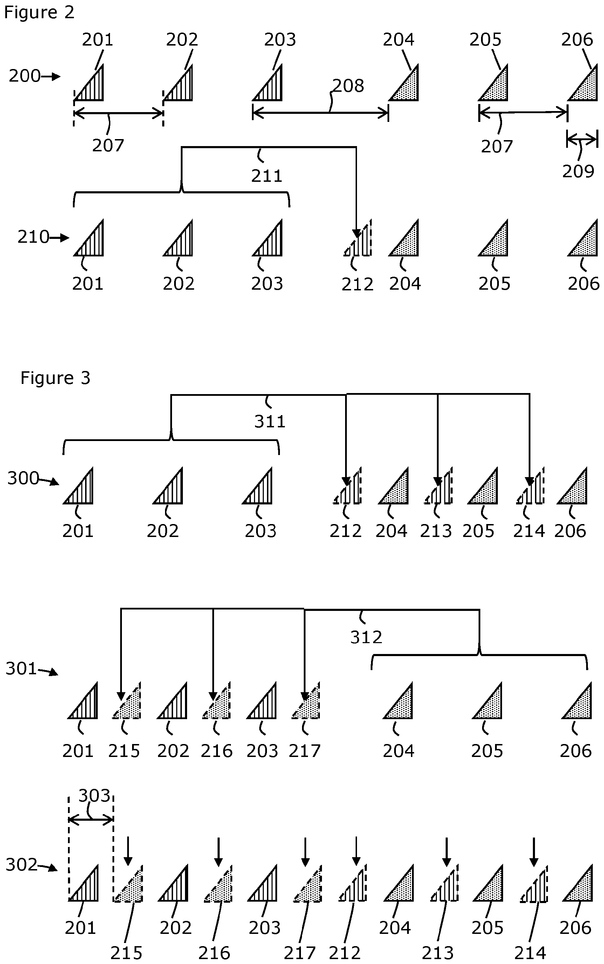

An example embodiment will now be described with reference to Figures 1 and 2. Figure 2 shows a radar frame that has been transmitted by the transmitter arrangement 101. The radar frame 200 will be modified by its interaction and reflection from the environment. However, for the purposes of describing the present embodiment, the radar frame 200 may also be considered at least representative of what is received by the receiver arrangement 102 having reflected from the one or more targets. The example embodiment provides for advantageous processing of a radar frame having a specific form. Thus, as mentioned above, the apparatus 103 may generate the radar frame as well as process the reflection of it from one or more targets, or, in other examples, may receive information indicative of the radar frame that was transmitted by a different apparatus such that the advantageous processing may be performed.

In summary, the apparatus is configured to receive a radar signal 118 representing the reflected radar frame 200. The radar frame 200, that was transmitted, comprises a plurality of chirps 201-206. In the present example, the plurality of chirps of the radar frame are arranged in two groups comprising a first group 201-203 and a second group 204-206. Each group is shown with three chirps therein for ease of explanation, but in practice there may be many more chirps. In other examples, two or more or three or more groups of chirps may be provided in the radar frame. The chirps of one group relative to another group and/or the chirps within a group may be of the same form (i.e. change in frequency over time) or different. However, the first group of chirps 201-203 are transmitted with a first pulse repetition interval 207 between the chirps therein. The second group of chirps 204-206, in the present example, are transmitted also with the first pulse repetition interval 207 between the chirps therein (although in other examples the PRI may be different). The first group 201-203 and the second group 204-206 are separated by a group separation time interval 208 between a final chirp 203 in the first group 201-203 and a first chirp 204 in the second group 204-206 that is different to the first pulse repetition interval 207. In one or more examples, the group separation time interval 208 is different to the first pulse repetition interval 207 by one chirp duration 209 or at least one chirp duration 209.

In some examples, the group separation time interval 208 is greater than the first pulse repetition interval 207 by at least one chirp duration 209. In some examples, the group separation time interval 208 is less than the first pulse repetition interval 207 by at least one chirp duration.

In the present example, the first pulse repetition interval 207 comprises 2T. The group separation time interval 208 comprises 3T. Thus, in the present example, the first pulse repetition interval 207 comprises twice a base time interval, T, while the group separation time interval 208 is greater, such as by at least one base time interval T, and in some examples comprises an odd integer multiple of the base time interval, T.

In other examples, the first pulse repetition interval 207 comprises NT where N is the number of groups of chirps and T is a predetermined base time interval. The group separation time interval 208 is different to the first pulse repetition interval 207 by at least one chirp duration.

In a further example, the first pulse repetition interval 207 comprises between 2T and 4T.

The apparatus 103 is configured to generate a modified received radar frame 210 based on the received radar frame 200 by performing the following steps. The apparatus 103 may comprise a processor and memory or other processing circuity for performing the generation of the modified received radar frame 210.

The apparatus 103 is configured to perform a first extrapolation 211, based on temporal positions of the chirps 201-203 in the first group of the received radar frame, to generate at least one extrapolated chirp 212 at a later time in the modified received radar frame 210.

The first extrapolation 211 may comprise determining the time spacing between the chirps 201-203 of the first group and, by linear extrapolation, determine a time at which the at least one extrapolated chirp 212 would be received had it been transmitted in the radar frame 200.

The group separation time interval 208 and the first pulse repetition interval 207 are determined such that the one or more extrapolated chirps 212 do not temporally overlap with the plurality of chirps 201-206 in the modified received radar frame 210.

The apparatus 103 is configured to perform processing based on said modified received radar frame 210 to determine properties of one or more targets. The properties that may be determined may be those that are conventionally determined with processing of FMCW radar frames and will be familiar to those skilled in the art. For example, determining the presence or quantity of one or more targets, determining the range to the one or more targets, determining the direction to the one or more targets, and/or determining the velocity of the one or more targets.

Example figure 3 shows a further example of generation of the modified received radar frame 302. In this example, the modified received radar frame 302 is generated by the first extrapolation 311, the result shown as 300, and a second extrapolation 312, the result shown as 301, to form the final modified received radar frame 302. However, it will be appreciated that in other embodiments, the modified received radar frame may comprise the frames shown as 300 or 301 with only part of the extrapolation performed.

In the example (part) modified received radar frame 300, the first extrapolation 311 is again based on temporal positions of the chirps 201-203 in the first group of the received radar frame 200. In this example, the first extrapolation is configured to generate a plurality of extrapolated chirps 212, 213, 214 each at a different later time in the modified received radar frame 210.

In this example, at least one of the extrapolated chirps generated by the first extrapolation 311 are extrapolated to a time that is between two chirps of the second group in the received radar frame. Thus, extrapolated chirp 213 is between chirps 204 and 205. Likewise, extrapolated chirp 214 is between chirps 205 and 206.

Further, in this example, the first extrapolation 311 is configured to generate a plurality of extrapolated chirps 212, 213, 214 which are extrapolated such that the extrapolated chirps 212, 213, 214 are interleaved with chirps 204-206 of the second group in the (part) modified received radar frame 300. Further, in this or other examples, at least one extrapolated chirp 212 may be extrapolated to a time temporally (directly) adjacent to a first chirp 204 of the second group 204-206.

The generation of the modified received radar frame 301 comprises a second extrapolation 312, based on temporal positions of the chirps in the second group 204-206 of the received radar frame, to generate at least one extrapolated chirp 215, 216, 217 at an earlier time in the (part) modified received radar frame 301. In the present example a plurality of extrapolated chirps 215, 216, 217 each at a different earlier time are generated.

In this example, at least one of the extrapolated chirps 215, 216, 217 generated by the second extrapolation 312 are extrapolated to a time that is between two chirps of the first group 201-203 in the received radar frame. Thus, the extrapolated chirp 215 is between chirps 201 and 202. Likewise, the extrapolated chirp 216 is between chirps 202 and 203.

Further, in this example, the second extrapolation 312 is configured to generate a plurality of extrapolated chirps 215, 216, 217 which are extrapolated such that the extrapolated chirps 215, 216, 217 are interleaved with chirps 201-203 of the first group in the modified received radar frame 301. Further, in this or other examples, at least one extrapolated chirp 217 may be extrapolated to a time temporally (directly) adjacent to a final chirp 203 of the first group 201-203.

Finally, the modified received radar frame 302 is generated based on a combination of the result of the first extrapolation 311 and the result of the second extrapolation 312.

The modified received radar frame 302 has a pulse repetition interval 303 of base time interval, T, which is less than the first pulse repetition interval, 2T. At least velocity determination of the one or more targets may be performed on one or more such generated modified received radar frames 302. The reduced pulse repetition interval 303 "T" created by the interpolation of real chirps in the different groups has been found to provide for more effective unambiguous velocity determination of one or more targets.

Thus, to summarize, the radar frame 200 is generated with at least two groups of chirps having at least a first pulse repetition interval and a group separation time interval 208, and based on extrapolation of the chirps of at least a subset of the groups, the pulse repetition interval of at least a part of the modified received radar frame 302 generated by the extrapolation is less than the first pulse repetition interval. Further, the extrapolation that is performed and/or the group separation time interval 208 and the first pulse repetition interval 207 is selected such that the extrapolated chirps are temporally non-overlapping with the chirps of the received radar frame 200.

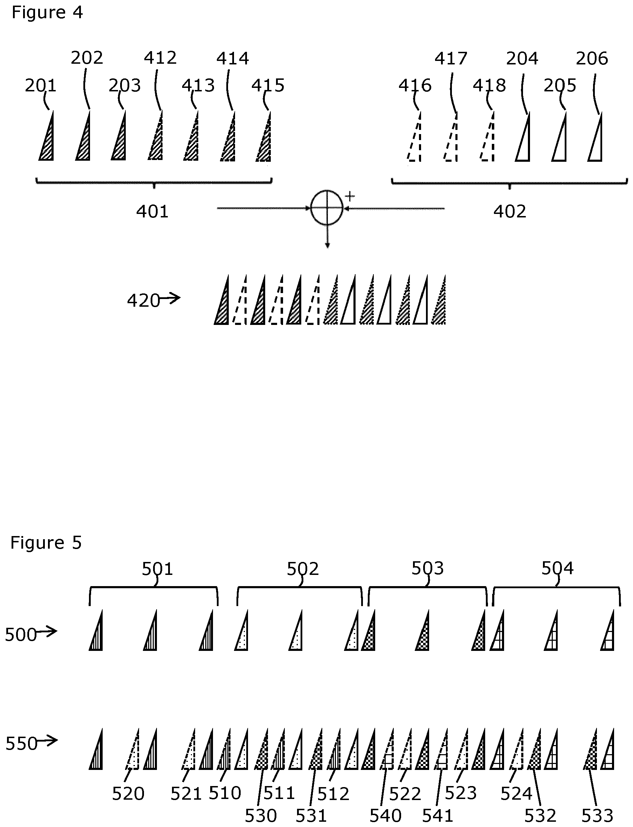

Figure 4 shows a further embodiment that includes separating the first group and the second group in the received radar frame, and performing the first extrapolation and the second extrapolation on the separated parts before recombining the parts. In the present example, a Fast Fourier Transform is applied before their recombination.

Thus, with reference to figure 4, the apparatus 100 may be configured to:

extract the chirps 201-203 corresponding to the first group from the received radar frame 200 to generate a first received radar frame;
extract the chirps 204-206 corresponding to the second group from the received radar frame 200 to generate a second received radar frame;
generate a modified first received radar frame 401 by performing said first extrapolation, based on temporal positions of the chirps in the first group of the first received radar frame 401, to generate a plurality of extrapolated chirps 412-415 at a later time in the modified first received radar frame; and
generate a modified second received radar frame 402 by performing the second extrapolation, based on temporal positions of the chirps in the second group of the second received radar frame 402, to generate a plurality of extrapolated chirps 416-418 at an earlier time in the modified second received radar frame 402.

The apparatus 103 is configured to determine an FFT of the modified first received radar frame 401. Further, the apparatus 103 is configured to determine an FFT of the modified second received radar frame 402.

Thus, in this example, the modified received radar frame 420 comprises a sum of the FFT of the modified first received radar frame and the FFT of the modified second received radar frame.

We now return to steps 122-125 shown in the apparatus 103. The steps comprise, at step 122, perform the first extrapolation and however many further extrapolations, such as the second extrapolation, to realise interleaved, modified received radar frames (also known as "Doppler samples"). This may be performed for each frequency at which the radar system 100 operates.

Step 123 represents the computing of the FFT of the first/second/etcetera modified received radar frame for each group separately.

Step 124 represents constructing the modified received radar frame 420, otherwise termed the "Doppler profile" by summing the FFT results of each group determined in step 123.

Step 125 represents performing a level check, which will be described in more detail below.

It will be appreciated that the steps 122-124 are a brief summary of the method disclosed herein. In more detail, steps 122-124 may comprise the apparatus being configured to:

1) Provide for transmission of a radar frame having M groups of chirps with $MT$ spacing within each group, where M is even, and the group separation time interval is an odd number of T between groups.
2) Perform range processing as will be known to those skilled in the art is performed.
3) The following steps are performed for each range bin:

a. Separate slow-time samples into groups based on PRI spacing as exemplified in Figure 4;
b. Use extrapolation, which may include prediction techniques, to increase a length of each group (in terms of the number of chirps, including real chirps + extrapolated chirps) such that after super positioning all of the extrapolated groups, a full or almost full frame is obtained (i.e. slow-time samples (chirps) are uniformly spaced at $T$ )
c. Perform the Doppler FFT as described with reference to Figure 4;

4) The apparatus is configured to generate a range-doppler map based on the resultant modified received radar frames for subsequent, conventional processing.

The extrapolation performed in step 3 may include the Burg Method, Yule Walker Equations, or Levinson Method to estimate an Autoregressive model based on a given order. Thus, as will be understood by those skilled in the art, prediction coefficients from the AR model and existing samples (chirps) in each group are used to extrapolate the number of chirps. A second possible method for extrapolating may be use of an Adaptive Filter or Neural Network (RLS, LMS, etc) as a linear predictor to predict future/past samples. Other methods are possible, and it will be appreciated that the embodiments of the present disclosure relate to the extrapolation of chirps in the groups as described herein to improve the PRI rather than the precise method by which the extrapolation is performed.

Before describing the level check process, Figure 5 illustrates an embodiment in which the transmitted and received radar frame 500 comprises four groups of chirps, namely a first group 501, a second group 502, a third group 503 and a fourth group 504.

In a first extrapolation, the first group is extrapolated (only) to a later time to provide the extrapolated chirps 510, 511, 512.

In a second extrapolation, the second group is extrapolated to earlier and later times to provide the extrapolated chirps 520, 521, 522, 523, 524.

In a third extrapolation, the third group is extrapolated to earlier and later times to provide the extrapolated chirps 530, 531, 532, 533.

In a fourth extrapolation, the fourth group is extrapolated (only) to earlier times to provide the extrapolated chirps 540, 541.

The resulting modified received radar frame is shown as 550. Thus, the number of extrapolated chirps extrapolated from a particular group may be independent of any other group. Further, the chirps of each group may be extrapolated to earlier and/or later times in the received radar frame 500 when generating the modified received radar frame 550. In particular, for a radar frame comprising three or more groups, a group located in the radar frame with other groups earlier and later may be extrapolated to earlier and later times, while those groups at the beginning and end of the radar frame may be extrapolated only in one temporal direction.

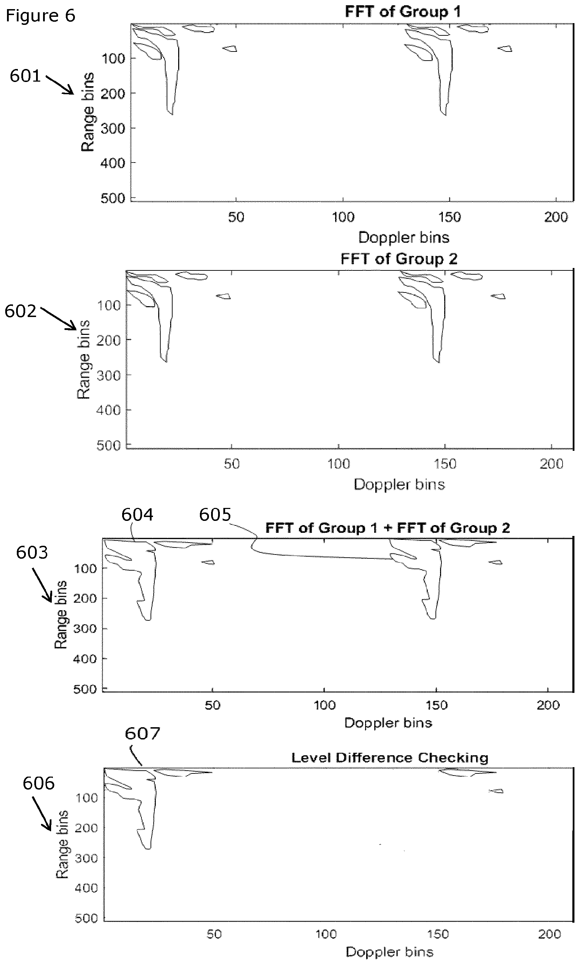

We will now describe the optional level check step 125 with reference to Figure 6.

Figure 6 shows a series of plots of range bins vs doppler bins, as will be familiar to those skilled in the art.

Plot 601 shows the plot of the FFT of the first group. Plot 602 shows the plot of the FFT of the second group. Plot 603 shows the sum of the FFT of the first group and the FFT of the second group. It can be seen that due to slight phase errors caused by the generation of the modified received radar frame, an ambiguity remains represented by the two regions 604 and 605 rather than a single region.

This ambiguity can be removed as shown in plot 606, by simply crosschecking the level of $k*FFT\{G_1+G_2\}$

$\le$ FFT{G$_1$ }+FFT{G$_2$}, where k is a constant close to "1"; and G$_1$ are the samples representing the chirps of the first group, e.g. 201-203, 212-214 and G$_2$ are the samples representing the chirps of the second group, e.g. 204-206, 215-217 in the slow time domain.

With this level check performed, it can be seen that plot 606 includes only one region 607 and thereby the ambiguity is resolved. Thus, samples where k*FFT{G$_1$ +G$_2$}$\le$ FFT{G$_1$ }+FFT{G$_2$} are removed. Thus, the apparatus may be configured to, in processing and generating the modified received radar frame(s), evaluate which samples representing the chirps of the radar frame meet the condition k*FFT{G$_1$+G$_2$} $\le$ FFT{G$_1$ }+FFT{G$_2$} and remove them in the modified received radar frame.

Implementation-wise, the apparatus is configured to apply the techniques described herein per iso-range line or per range bin. As will be understood, if you have a Range-Doppler Map, an iso-range line or range-bin can be a horizontal line containing all the Doppler bins at that particular range. In one or more examples, the techniques described herein may be applied selectively.

In one or more examples, the extrapolation may be based on an autoregressive (AR) parameter estimation technique in which the AR prediction coefficients are the same for all of the groups 201, 202, 501, 502, 503, 504, meaning that either they may only be computed once, or averaged for a more robust performance. This statement also holds for the multiple RX and TX, meaning that for a 3TX - 4RX TDM MIMO radar, only one set of coefficients is needed for all channels.

In one or more examples, the level check step 125 may replace the CFAR step 126.

The extrapolations described herein may take various forms. In one or more examples, the extrapolation performed is a linear extrapolation. In one or more other examples, the extrapolation is based on Burg's algorithm for autoregressive parameter estimation.

Burg's algorithm

**Example Algorithm: Burg recursion**

> Input: $x, p,\ N$
> Output: $\mathbf{A}_k$
> Initialize: $\boldsymbol{f}_0 = \boldsymbol{b}_0 = \boldsymbol{x},\ \mathbf{A}_0 = 1$
> for $k = 0{:}p-1$
>     for $n = 0{:}N-1-k$
>         $\mu_k(\boldsymbol{f}_k(n), \boldsymbol{b}_k(n))$
>         $\boldsymbol{f}_{k+1}(n) = \boldsymbol{f}_k(n) + \mu_k * \boldsymbol{b}_k(n)$
>         $\boldsymbol{b}_{k+1}(n) = \boldsymbol{b}_k(n) + \mu_k * \boldsymbol{f}_k(n)$
>     end
>     $\mathbf{A}_{k+1} = [\mathbf{A}_k; 0] + \ \mu_k * [0; flip(\mathbf{A}_k)]$
> End

Where x is the input signal to the algorithm, where p is the order or number of poles that describe the Auto Regressive model, N is the number of samples in x, Ak are the prediction coefficients, and the vectors f$_0$, b$_0$, f$_k$, and b$_k$ are intermediary results in the algorithm. μ$_k$ is the prediction step.

Burg's algorithm for AR parameter estimation allows extrapolation of the input signal, which helps increasing spectral resolution. Being most popular for minimizing both forward and backward prediction errors, Burg's algorithm can be viewed as a constrained least squares minimization.

The assumption made for this algorithm is that the process is wide sense stationary, hence the coefficients of the backward prediction error are identical to the coefficients of the optimum forward prediction error, but conjugated and reversed in time. As result the forward linear prediction error, $f_e(n)$ is defined for p $\le n \le N$ - 1, where $a_{p0}$ is defined as unity and $a_{pk}$ are the AR coefficients at order p, and $x_n$ are the data samples.

$$f_e(n) = x_n - \hat{x}_n = \sum_{k=0}^{p} a_{pk} x_{n-k}$$

Backward linear prediction error is defined for p $\le n \le N$ - 1, too and is defined as:

$$b_e(n) = x_n - \hat{x}_n = \sum_{k=0}^{p} a_{pk}^* x_{n-p-k}$$

where the asterisk means the complex conjugate operation. To estimate the AR model coefficients, each $a_{pk}$ coefficient must satisfy Levinson recursion:

$$a_{k+1}(i) = a_k(i) + \mu a_k^*(k - i + 1)$$

where $i$ = [1, $k$] and $\mu$ is the *constrained* coefficient.

This constraint ensures filter is stable, which means all the poles are positioned within the unit circle. Burg changed the way $\mu$ is computed, by minimizing the total sum of $f_e(n)$ and $b_e(n)$.

The above pseudocode snapshot shows that $\mu$ is updated for each k. This was possible based on the forward linear prediction:

$$f(n) = \hat{x}_n = -\sum_{k=1}^{p} a_{pk} x_{n-k}$$ and backward linear prediction: $$b(n) = \hat{x}_n = -\sum_{k=1}^{p} a_{pk} x_{n+k}$$

equations written in a recursive manner based on the Levinson recursion.

After $\mu$ was updated, AR model parameters $a_{pk}$ are updated in the last line. Burg's algorithm shows a computation complexity that requires *3Np - p$^2$ - N + 3p* complex multiplications, *3Np - p$^2$ - 2N - p* complex adds, and p real divisions. Moreover, storage of $3N + p + 2$ complex values is also required.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

**Claims**

1. An apparatus for processing Frequency Modulated Continuous Wave, FMCW, radar signals, the apparatus configured to:

   receive a radar signal comprising a radar frame having reflected from one or more targets, wherein the radar frame comprises a plurality of chirps, the plurality of chirps comprising at least two groups of chirps comprising a first group transmitted with a first pulse repetition interval between the chirps therein, and a second group transmitted with a second pulse repetition interval between the chirps therein, wherein the first group and the second group are separated by a group separation time interval between a final chirp in the first group and a first chirp in the second group that is different to one or both of the first pulse repetition interval and the second pulse repetition interval;
   generate a modified received radar frame by at least:
   first extrapolation, based on temporal positions of the chirps in the first group of the received radar frame, to generate at least one extrapolated chirp in the modified received radar frame;
   perform processing based on said modified received radar frame to determine properties of the one or more targets.

2. The apparatus of claim 1, wherein said at least one extrapolated chirp generated by the first extrapolation is extrapolated to a time that is later in the received radar frame and between two chirps of the second group in the received radar frame.

3. The apparatus of claim 1, wherein said first extrapolation is configured to generate a plurality of extrapolated chirps which are extrapolated such that the plurality of extrapolated chirps are interleaved with chirps of the second group in the modified received radar frame.

4. The apparatus of claim 1 or claim 2, wherein said generation of the modified received radar frame further comprises a:
   second extrapolation, based on temporal positions of the chirps in the second group of the received radar frame, to generate at least one extrapolated chirp in the modified received radar frame.

5. The apparatus of claim 4, wherein said at least one extrapolated chirp generated by the second extrapolation is extrapolated to a time that is between two chirps of the first group in the modified received radar frame.

6. The apparatus of claim 4, wherein said second extrapolation is configured to generate a plurality of extrapolated chirps which are extrapolated such that the extrapolated chirps are interleaved with chirps of the first group in the modified received radar frame.

7. The apparatus of any preceding claim, wherein said generation of the extrapolated chirps is configured to generate the modified received radar frame with a pulse repetition interval less than the first pulse repetition interval and less than the second pulse repetition interval.

8. The apparatus of any preceding claim, wherein the extrapolation comprises linear extrapolation.

9. The apparatus of any preceding claim, wherein the apparatus is configured to perform said extrapolation based on Burg's algorithm for autoregressive parameter estimation.

10. The apparatus of any preceding claim, wherein the generation of the modified received radar frame further comprises the apparatus being configured to:

extract the chirps corresponding to the first group from the received radar frame to generate a first received radar frame;
extract the chirps corresponding to the second group from the received radar frame to generate a second received radar frame;
generate a modified first received radar frame by performing said first extrapolation, based on temporal positions of the chirps in the first group of the first received radar frame, to generate at least one extrapolated chirp at a later time in the modified first received radar frame;
generate a modified second received radar frame by performing second extrapolation, based on temporal positions of the chirps in the second group of the second received radar frame, to generate at least one extrapolated chirp at an earlier time in the modified second received radar frame;
generate a Fast Fourier Transform, FFT, of the modified first received radar frame;
generate a FFT of the modified second received radar frame; and

wherein the modified received radar frame comprises a sum of FFT of the modified first received radar frame and the FFT of the modified second received radar frame.

11. The apparatus of any preceding claim, wherein the apparatus is configured to:
provide for transmission of the radar frame having said first pulse repetition interval, second pulse repetition interval and said group separation time interval properties.

12. The apparatus of claim 11, wherein the first pulse repetition interval and the second pulse repetition interval each comprise the product of the number of groups, N, and a base time interval, T; and said group separation time interval between any two temporally adjacent groups comprises NT plus or minus the base time interval T.

13. The apparatus of claim 11, wherein one or both of:

the first extrapolation and any further extrapolation is performed such; and
the group separation time interval and the first pulse repetition interval and the second pulse repetition time interval are selected such;
that the extrapolated chirps are temporally non-overlapping with the chirps of the received radar frame.

14. The apparatus of any preceding claim wherein the properties of the one or more targets determined based on the modified received radar frame comprise one or more of: distance to the one or more targets; direction towards the one or more targets; and velocity of the one or more targets.

15. A method of processing Frequency Modulated Continuous Wave, FMCW, radar signals, the apparatus configured to:

receiving a radar signal comprising a radar frame having reflected from one or more targets, wherein the radar frame comprises a plurality of chirps, the plurality of chirps comprising at least two groups of chirps comprising a first group transmitted with a first pulse repetition interval between the chirps therein, and a second group transmitted with a second pulse repetition interval between the chirps therein, wherein the first group and the second group are separated by a group separation time interval between a final chirp in the first group and a first chirp in the second group that is different to one or both of the first pulse repetition interval and the second pulse repetition interval;
generating a modified received radar frame by:

first extrapolation, based on temporal positions of the chirps in the first group of the received radar frame, to generate at least one extrapolated chirp in the modified received radar frame; and

performing processing based on said modified received radar frame to determine properties of the one or more targets.

Figure 1

Figure 2

Figure 3

Figure 4

Figure 5

Figure 6

FFT of Group 1

601

FFT of Group 2

602

604  605  FFT of Group 1 + FFT of Group 2

603

607  Level Difference Checking

606

Europäisches
Patentamt

European
Patent Office

Office européen
des brevets

## EUROPEAN SEARCH REPORT

**Application Number**

EP 24 17 1222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 080 242 A1 (NXP BV [NL]) 26 October 2022 (2022-10-26) * paragraphs [0001] - [0007], [0013] - [0042]; figures 2,3A * | 1-15 | INV. G01S7/35 G01S13/34 G01S13/58 |
| Y | NEEMAT SHAREF ET AL: "Reconfigurable Range-Doppler Processing and Range Resolution Improvement for FMCW Radar", IEEE SENSORS JOURNAL, IEEE, USA, vol. 19, no. 20, 15 October 2019 (2019-10-15), pages 9294-9303, XP011746706, ISSN: 1530-437X, DOI: 10.1109/JSEN.2019.2923053 [retrieved on 2019-09-17] * abstract * * Sections I-III * | 1-15 | |
| Y | ZOLESIO J L ET AL: "Signal reconstruction via under-sampled signals", RADAR 92. INTERNATIONAL CONFERENCE BRIGHTON, UK, LONDON, UK, IEE, UK, 1 January 1992 (1992-01-01), pages 304-307, XP006514823, ISBN: 978-0-85296-553-5 * Sections 1-5. * | 1-15 | **TECHNICAL FIELDS SEARCHED (IPC)** G01S |

The present search report has been drawn up for all claims

| Place of search | Date of completion of the search | Examiner |
|---|---|---|
| Munich | 5 September 2024 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1222

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | Publication date | Patent family member(s) | Publication date |
|---|---|---|---|
| EP 4080242 A1 | 26-10-2022 | EP 4080242 A1<br>US 2022334240 A1 | 26-10-2022<br>20-10-2022 |

EPO FORM P0459

For more details about this annex : see Official Journal of the European Patent Office, No. 12/82